# EUROPEAN PATENT APPLICATION

(11) **EP 3 901 874 A1**
(43) Date of publication of application: **27.10.2021**
(21) Application number: 18943777.5
(22) Date of filing: 18.12.2018
(51) Int. Cl.: G06Q 10/10

(54) **INFORMATION PROCESSING DEVICE, DATA TRANSFER MANAGEMENT METHOD, AND PROGRAM**

(71) Applicant: Mitsubishi Electric Corporation, Tokyo 100-8310 (JP)
(72) Inventor: NAKAJIMA, Yoshinori, Tokyo 100-8310 (JP); MIZUNO, Kanji, Tokyo 100-8310 (JP); KOMATSU, Masayuki, Tokyo 100-8310 (JP); INADA, Toru, Tokyo 100-8310 (JP)
(74) Representative: Studio Torta S.p.A.
(86) International application number: PCT/JP2018/046609
(87) International publication number: WO 2020/129159

(57) **Abstract**

An information processing device (1) includes a signal receiver (12), an entry information inputter (16), a storage (11), and a document information generator (15). The signal receiver (12) receives a signal representing a transfer request to transfer data. The entry information inputter (16) inputs entry information that is information to be entered into a transfer procedure document that is a document for a transfer procedure with respect to the transfer request. The storage (11) stores the entry information inputted by the entry information inputter (16). The document information generator (15) retrieves, in response to a second transfer request, from the storage (11) first entry information inputted by the entry information inputter (16) to be included in the transfer procedure document for a transfer procedure with respect to a first transfer request that is different from the second transfer request, and generates document information that represents the transfer procedure document including the retrieved first entry information.

## Description

### Technical Field

The present disclosure relates to an information processing device, a data transfer management method, and a program.

### Background Art

Due to globalization, various types of data are exchanged across borders between countries, regions, or the like. Under such circumstances, since there are various barriers such as contractual and legal barriers to transfer of data such as access and acquisition, techniques are being researched for avoiding the risk of infringement of the laws, contracts or the like to enable safety transfer of data. For example, Patent Literature 1 discloses a method for determining the safety of import/export of data based on legal information of each country.

### Citation List

### Patent Literature

Patent Literature 1: WO 2013/065161

### Summary of Invention

### Technical Problem

Increased speed of networks enables prompt transfer of data, even in the case where the data is stored in a geographically remote location. However, various types of procedures are necessary for passing through the barriers of laws, contracts or the like, especially in the case of transfer across a border between countries, regions or the like with different laws. Thus time required for the procedures is a bottleneck and causes a problem in that prompt transfer of data cannot be achieved. Application of the technique disclosed in Patent Literature 1 to this problem merely enables confirmation of existence of a risk relating to the laws, contracts or the like, and cannot achieve prompt transfer of data.

The present disclosure is made in view of the aforementioned circumstances, and an objective of the present disclosure is to provide an information processing device, a data transfer management method, and a program that enable prompt transfer of data.

### Solution to Problem

To achieve the aforementioned objective, an information processing device according to the present disclosure includes signal acquisition means, entry information acquisition means, storage means, and document information generation means. The signal acquisition means acquires a signal representing a transfer request to transfer data. The entry information acquisition means acquires entry information that is information to be entered into a transfer procedure document that is a document for a transfer procedure with respect to the transfer request. The storage means stores the entry information acquired by the entry information acquisition means. The document information generation means (i) retrieves, in response to a second transfer request, from the storage means first entry information acquired by the entry information acquisition means to be included in the transfer procedure document for a transfer procedure with respect to a first transfer request that is different from the second transfer request, and (ii) generates document information that represents the transfer procedure document including the retrieved first entry information.

### Advantageous Effects of Invention

According to the present disclosure, prompt transfer of data can be achieved by generating the document information representing the transfer procedure document.

### Brief Description of Drawings

FIG. 1 is schematic diagram of an information processing device according to Embodiment 1 of the present disclosure;

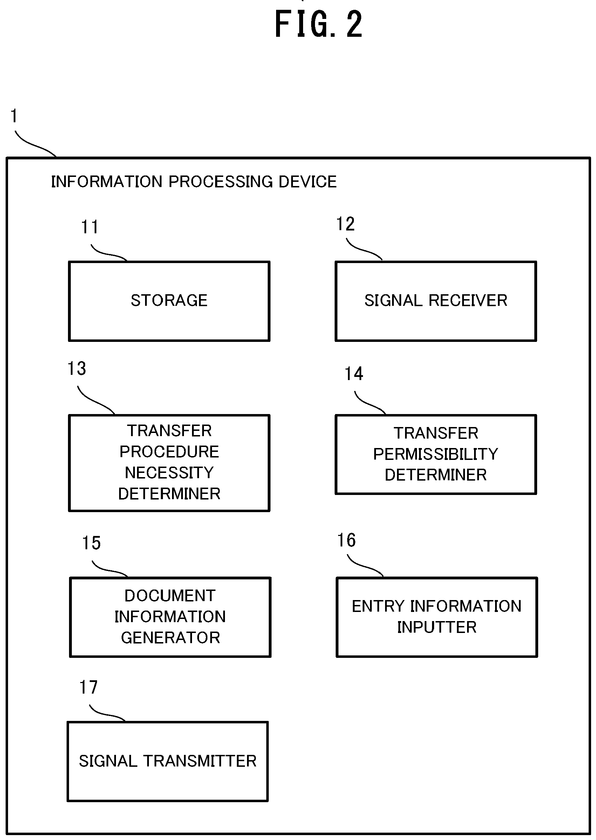

FIG. 2 is a functional block diagram of the information processing device according to Embodiment 1 of the present disclosure;
FIG. 3 is a hardware configuration diagram of the information processing device according to Embodiment 1 of the present disclosure;
FIG. 4 illustrates an example of barrier information according to Embodiment 1 of the present disclosure;
FIG. 5 illustrates an example of attribute information according to Embodiment 1 of the present disclosure;
FIG. 6 illustrates an example of operation data according to Embodiment 1 of the present disclosure;
FIG. 7 illustrates an example of property data according to Embodiment 1 of the present disclosure;
FIG. 8 illustrates an example of barrier-flag-document relevance information according to Embodiment 1 of the present disclosure;
FIG. 9 is a sequence diagram of data transfer processing according to Embodiment 1 of the present disclosure;
FIG. 10 is a flowchart of transfer request response processing according to Embodiment 1 of the present disclosure;
FIG. 11 illustrates an example of a transfer procedure document according to Embodiment 1 of the present disclosure;
FIG. 12 illustrates another example of the transfer procedure document according to Embodiment 1 of the present disclosure;
FIG. 13 illustrates an example of transfer history information according to Embodiment 1 of the present disclosure;
FIG. 14 illustrated an example of requester entry information according to Embodiment 1 of the present disclosure; and
FIG. 15 illustrates an example of data entry information according to Embodiment 1 of the present disclosure.

### Description of Embodiments

### Embodiment 1

Hereinafter, an embodiment is described, with reference to the drawings, in which an information processing device according to the present disclosure is applied to transfer of data across a boundary.

An information processing device 1 according to the present embodiment is a device that determines whether a transfer procedure is necessary in response to a transfer request to transfer data and generates, upon determining that the transfer procedure is necessary, document information for the transfer procedure. This data is various types of information exchanged on a network, such as operation data, electric power data, property data, technical data, drawing data, and an application program. The "transfer of data" means moving data. For example, the actions of performing browsing, downloading, operating, analyzing or the like of data via a network each include the transfer of data regardless of whether the action is temporary or permanent, and thus correspond to the "transfer of data".

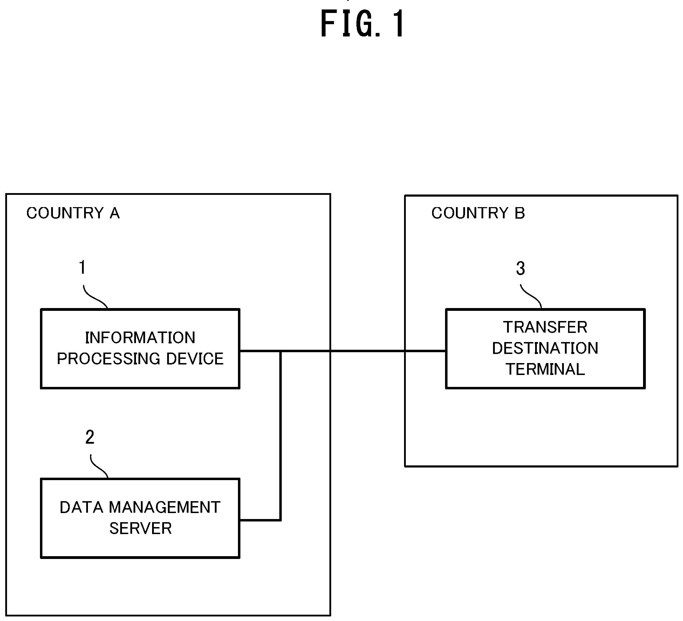

As illustrated in FIG. 1, the information processing device 1 is arranged, together with a data management server 2 that manages data, in a country A that is a transfer source. The information processing device 1 and the data management server 2 are communicably connected to each other. A transfer destination terminal 3 is arranged in a country B that is a transfer destination. The transfer destination terminal 3 is communicably connected to the information processing device 1 and the data management server 2.

Specifically, the information processing device 1 and the data management server 2 are connected via a local area network (LAN), and the transfer destination terminal 3 is connected to the LAN via an Internet connection or a dedicated line. However, communication methods for achievement of the above connection may be freely selected, and any other communication method can be employed.

The data management server 2 is a server that stores data. The data management server 2, upon receiving from the information processing device 1 a signal for permission for transfer, executes processing for transferring data to the transfer destination terminal 3 in the country B.

The transfer destination terminal 3 receives an operation by a requester making a request for transfer in the country B, transmits to the information processing device 1 a signal representing a transfer request, and upon permission for the transfer, receives the data from the data management server 2.

The information processing device 1 includes a storage 11 that stores various types of information, a signal receiver 12 that receives a signal, a transfer procedure necessity determiner 13 that determines whether the transfer procedure is necessary, a transfer permissibility determiner 14 that determines whether transfer is permissible, a document information generator 15 that generates document information representing a transfer procedure document, an entry information inputter 16 that inputs entry information to be entered into the transfer procedure document, and a signal transmitter 17 that transmits a signal.

The storage 11 stores setting information for processing executed by the information processing device 1, transfer history information that represents a history of data transfer, or the like.

The signal receiver 12 receives from the transfer destination terminal 3 the signal representing the transfer request. The signal receiver 12 receives from the transfer destination terminal 3, in addition to the signal representing the transfer request, data identification information for identification of data to be transferred, transfer destination information representing the transfer destination of the data, requester identification information for identification of the requester, or the like.

The transfer procedure necessity determiner 13 determines, for the transfer request represented by the signal received by the signal receiver 12, whether the transfer procedure is necessary. The transfer procedure necessity determiner 13 determines whether the transfer procedure is necessary based on the information received by the signal receiver 12, such as the setting information, the transfer destination information, and the requester identification information.

The transfer permissibility determiner 14 determines, for the transfer request represented by the signal received by the signal receiver 12, whether the transfer is to be permitted. When the transfer procedure necessity determiner 13 determines that the transfer procedure is unnecessary, the transfer permissibility determiner 14 determines that the transfer is to be permitted. Further, even in the case where a determination is made by the transfer procedure necessity determiner 13 that the transfer procedure is necessary, the transfer permissibility determiner 14 determines whether the transfer is to be permitted based on a history of transfer procedures in the past. In the case where the transfer procedure is necessarily to be performed by an operator being in charge of data transfer in the country A, permission for the transfer is not made immediately, and thus the transfer permissibility determiner 14 determines that the transfer is not to be permitted. Specific determination conditions are described later.

The document information generator 15, when the transfer permissibility determiner 14 determines that the transfer is not to be permitted, generates the document information representing the transfer procedure document. This "transfer procedure document" means various types of documents that are necessary for the transfer procedure. The transfer procedure document includes, for example, a parameter sheet, a questionnaire paper, a check sheet, a management ledger, or the like for export management, or a contract, an agreement form, or the like for transfer of personal data. The document information includes information of a print layout. This allows the operator to, in the case where a printed document is necessary for the procedure, obtain a printed transfer procedure document by, for example, printing using a non-illustrated printer.

Specifically, the document information generator 15 generates document information in which a piece of or all of the information to be entered into the transfer procedure document is filled, based on the transfer history information stored in the storage 11, the entry information inputted in response to transfer requests in the past by the entry information inputter 16 described later, or the like.

The entry information inputter 16, when a piece of or all of the information to be entered into the transfer procedure document is not filled in for document information generated by the document information generator 15, inputs entry information to be entered into the transfer procedure document in response to an operation by the operator. Specifically, the entry information inputter 16 displays the information received by the signal receiver 12, such as the data identification information, the transfer destination information, and the requester identification information. The operator, based on the displayed information, collects information to be entered when necessary, and operates the entry information inputter 16 to cause input of the entry information.

The signal transmitter 17, when the transfer permissibility determiner 14 determines that the transfer is to be permitted, transmits a transfer permission signal to the data management server 2. The data management server 2, upon receiving the transfer permission signal, performs the transfer of data. Additionally, the signal transmitter 17 transmits to the transfer destination terminal 3 a determination result signal representing a result of determination by the transfer permissibility determiner 14.

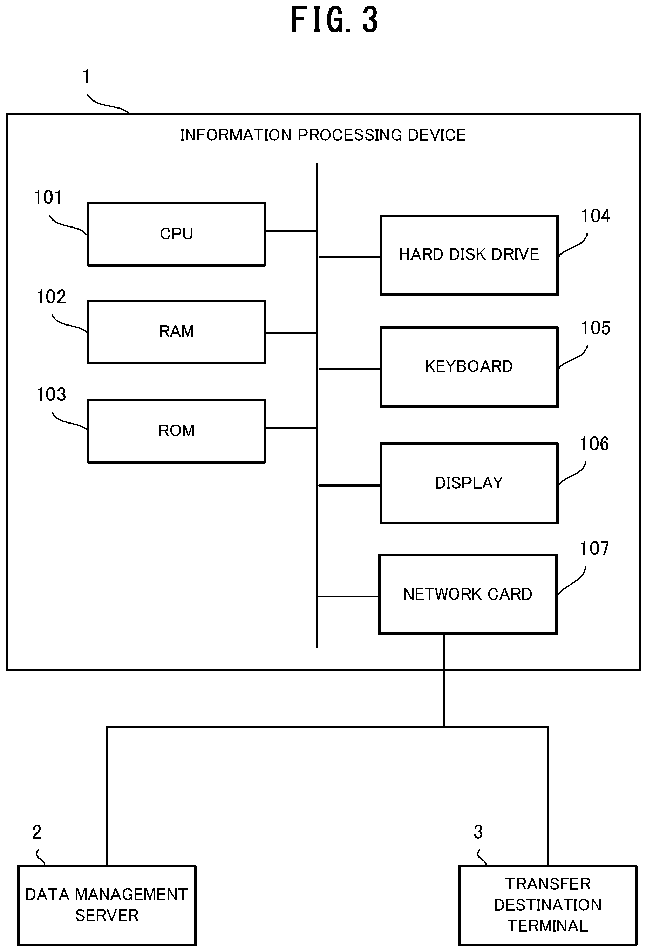

Next, hardware configuration of the information processing device 1 is described with reference to FIG. 3. The information processing device 1 includes a central processing unit (CPU) 101 that executes various types of processing, a random access memory (RAM) 102 that is a volatile memory, a read only memory (ROM) 103 that is a nonvolatile memory, a hard disk drive 104 that stores various types of information, a keyboard 105 that receives an operation, a display 106 that displays information, and a network card 107 that transmits and receives information.

The CPU 101 loads a program stored in the hard disk drive 104 into the RAM 102 to execute the program, thereby executing various types of processing described later.

The RAM 102 is a volatile memory and is used by the CPU 101 as a work area.

The ROM 103 is a nonvolatile memory and stores a control program, a basic input output system (BIOS) or the like that are executed by the CPU 101 and for basic operations of the information processing device 1.

The CPU 101, the RAM 102, and the ROM 103 cooperate to function as the transfer procedure necessity determiner 13, the transfer permissibility determiner 14, and the document information generator 15 that are described above.

The hard disk drive 104 is a medium for storing information. The hard disk drive 104 stores the setting information, the transfer history information, and the entry information that are described above, and a program for causing the CPU 101 to execute various types of processing. The hard disk drive 104 functions as the storage 11.

The keyboard 105 is a device that is operated for inputting information.

The display 106 is an information display device such as a liquid crystal panel and a projector. The display 106 displays information as may be required for the operation by a user. The keyboards 105 and the display 106 cooperate to function as the entry information inputter 16.

The network card 107 is a communication device that communicates information with an external device and is communicably connected to the data management server 2 and the transfer destination terminal 3. The network card 107 functions as the signal receiver 12 and the signal transmitter 17 that are described above.

Next, an operation of the information processing device 1 is described with reference to the drawings. The information processing device 1 stores, as the setting information, in the storage 11 in advance, barrier information, attribute information, barrier-flag-document relevance information, template information for the transfer procedure document, or the like.

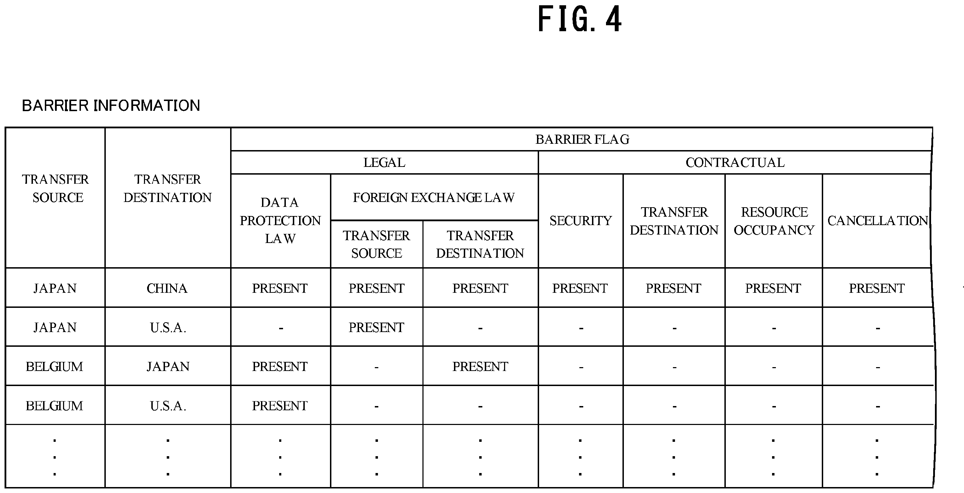

As illustrated in FIG. 4, the barrier information is information in which each combination of a transfer source and a transfer destination, which each are a country or a region, is associated with barrier flags from various viewpoints. The barrier flag is divided into legal or contractual fields. A "legal" barrier flag is divided into fields of data protection law, foreign exchange law, or the like, and the "foreign exchange law" barrier flag is further divided into fields of the transfer source and the transfer destination. The "legal" barrier flag indicates that a procedure to conform to each of the laws is necessary depending on the type of data. A "contractual" barrier flag is divided into fields of security, transfer destination, resource occupancy, cancellation, or the like. The "contractual" barrier flag indicates that, for each of contractual risks from the viewpoints, a procedure corresponding to the contractual risk is necessary. The "contractual" barrier flag indicates that a procedure is necessary regardless of the type of data.

For example, the case as illustrated in FIG. 4, in which the "legal" barrier flag corresponding to data protection law is "present" for a combination of Japan as the transfer source and China as the transfer destination, indicates that a transfer procedure conforming to data protection law is necessary for transfer of data from Japan to China, depending on the type of the data. The case of the "contractual" barrier flag corresponding to the resource occupancy is "-" for a combination of Japan as the transfer source and U.S.A. as the transfer destination indicates that a transfer procedure corresponding to a risk of resource occupancy is unnecessary for transfer of data from Japan to U.S.A., regardless of the type of the data.

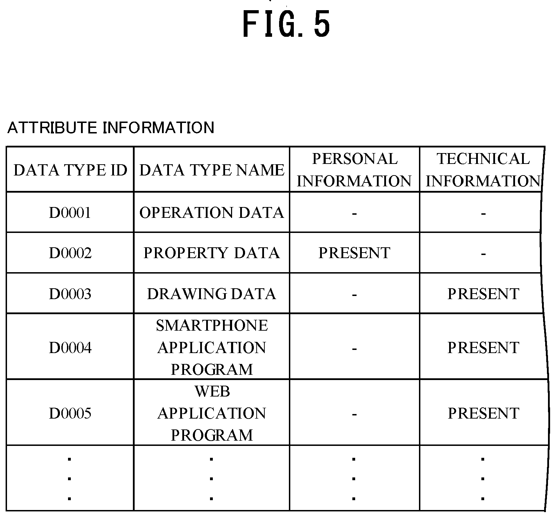

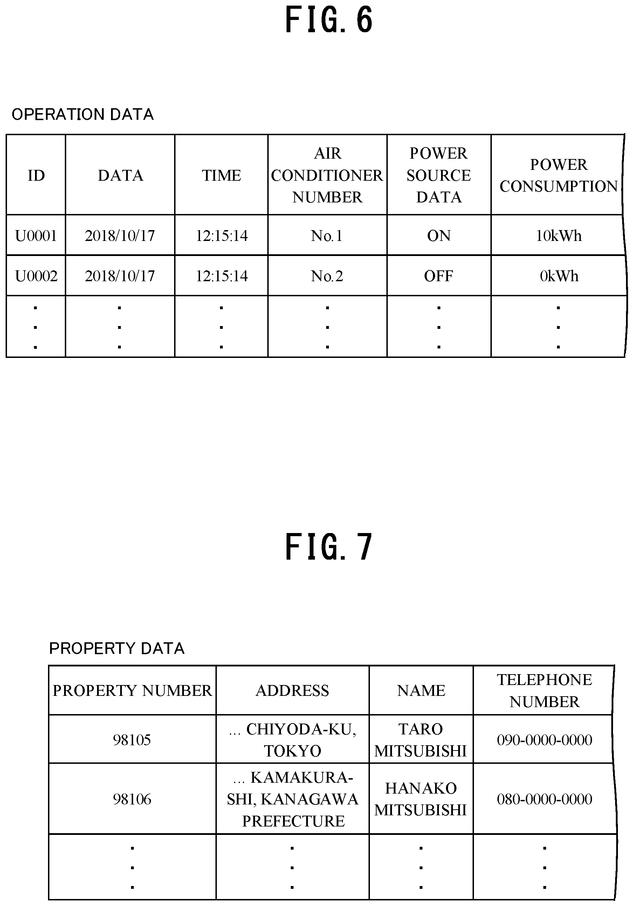

The attribute information is, as illustrated in FIG. 5, information that includes, as attribute information representing an attribute for each type of data, presence/absence of technical information and presence/absence of personal information that are associated with a data type ID for identification of the type of data and a data type name representing a name of the type of data. For example, the first record of FIG. 5 indicates that data corresponding to "operation data" as the "data type name" includes no technical information and no personal information. FIG. 6 illustrates an example of the data corresponding to "operation data" as the "data type name". The second record of FIG. 5 indicates that data corresponding to "property data" as the "data type name" includes technical information but no personal information. FIG. 7 illustrates an example of the data corresponding to "property data" as the "data type name".

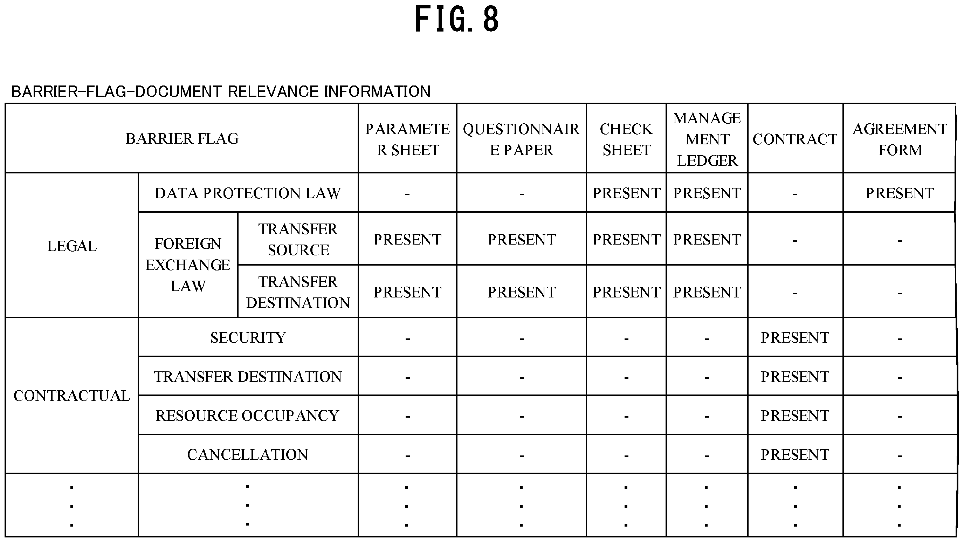

The barrier-flag-document relevance information is, as illustrated in FIG. 8, information that defines for each barrier flag a document that is necessary for the transfer procedure. For example, the first record of FIG. 8 indicates that a check sheet, a management ledger, and an agreement form are necessary for the transfer procedure in the case where the barrier flag corresponding to data protection law is "present".

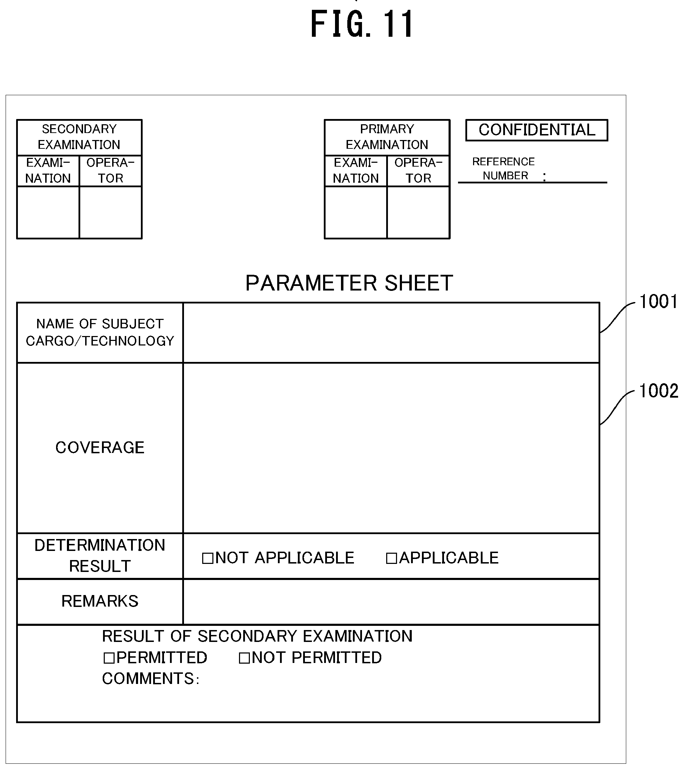

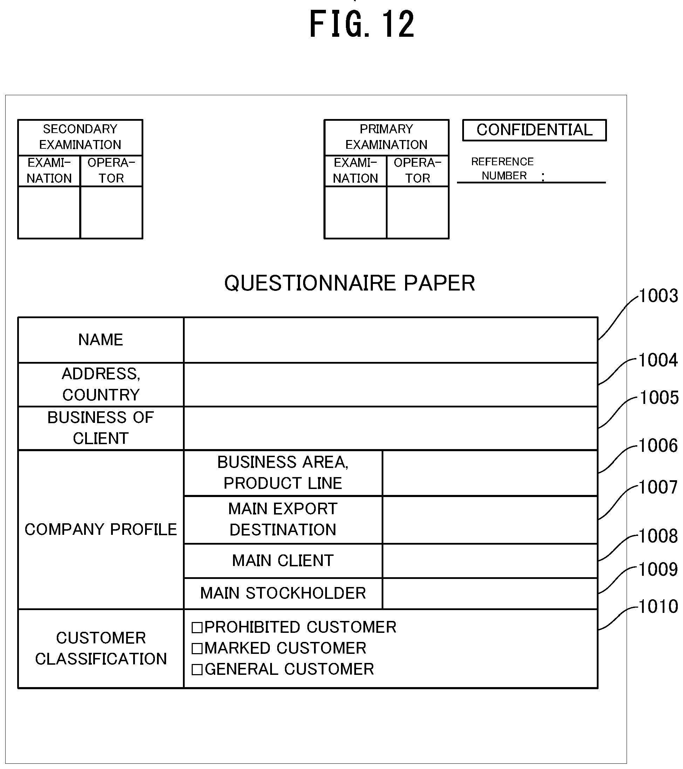

The template information for the transfer procedure document is information that includes, as a format to serve as a master of the document information, ruled lines, letters, or the like. The template information is stored for each document, such as the parameter sheet as illustrated in FIG. 11 and the questionnaire paper as illustrated in FIG. 12.

The storage 11 also stores the transfer history information, the entry information, or the like generated by data transfer in the past.

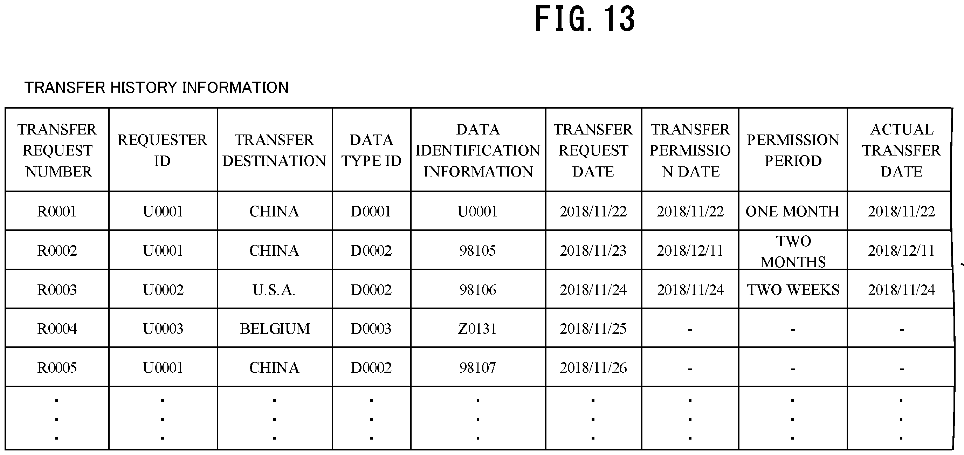

As illustrated in FIG. 13, the transfer history information includes, for a transfer request number identifying a transfer request, a requester ID, a transfer destination, a data type ID, data identification information, a transfer request date representing a date of the transfer request, a transfer permission date representing a date on which transfer is permitted, a permission period representing a period during which the transfer is permitted, an actual transfer date on which the transfer is performed, or the like that are associated with the transfer request number.

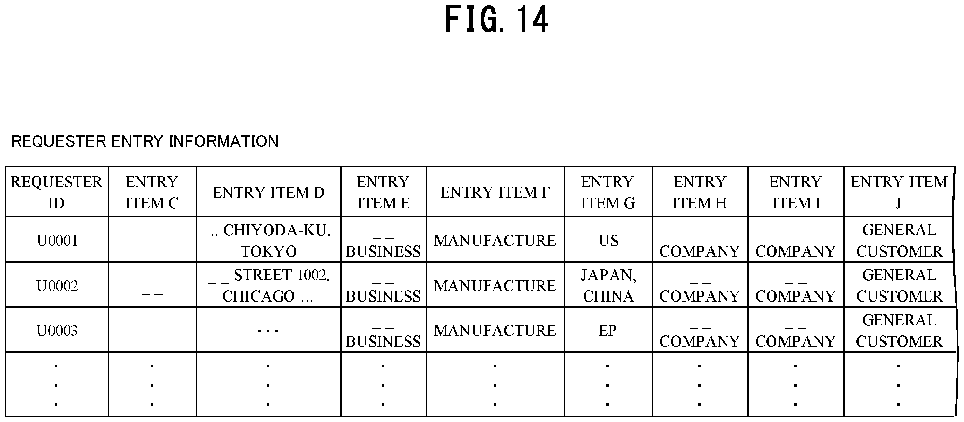

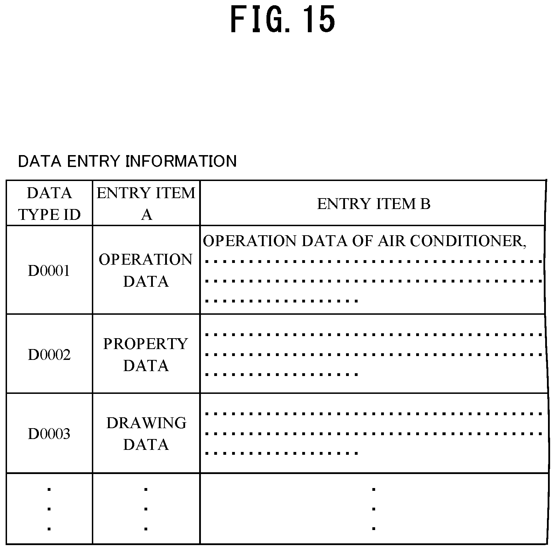

The entry information is classified as requester entry information that is entry information relating to the requester and as data entry information that is entry information relating to data. The requester entry information includes entry information for each requester ID, as illustrated in FIG. 14. The data entry information includes entry information for each type of data, as illustrated in FIG. 15.

First, the requester for data transfer making the transfer request in the country B, in the case of attempting to access, for example, property data in the country A, operates the transfer destination terminal 3 in order to transfer data. Then the transfer destination terminal 3 acquires, by a login authentication function thereof, a requester ID serving as the requester identification information for identification of the requester, and specifies, by operation by the requester, data identification information for identification of the data. In the case of property data as illustrated in FIG. 7, for example, a property number of a property that the requester desires to access serves as the data identification information. The transfer destination terminal 3 arranged in the country B stores in advance, as the transfer destination information, information representing the country B.

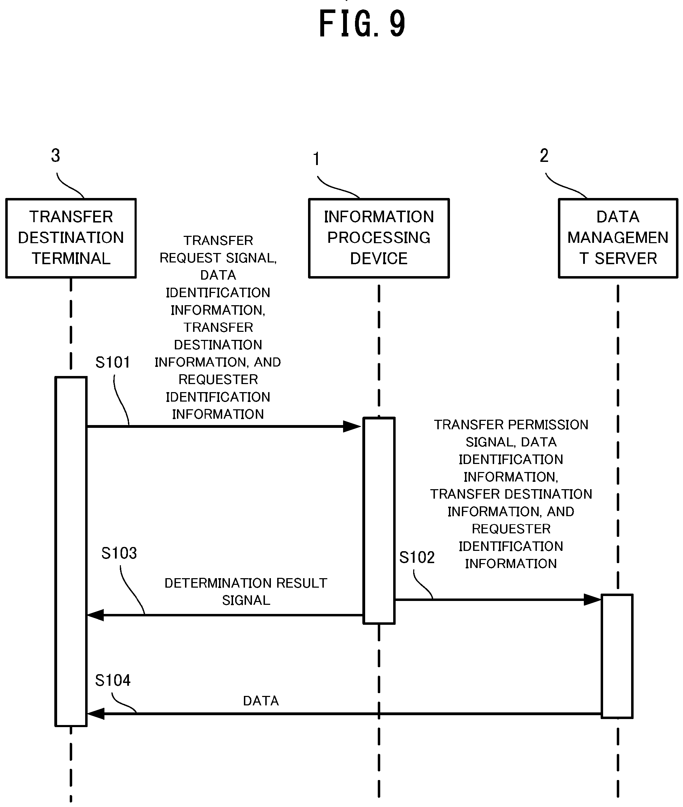

As illustrated in FIG. 9, the transfer destination terminal 3, in response to the operation by the requester, transmits to the information processing device 1 the data identification information, the transfer destination information, and the requester identification information, in addition to a transfer request signal (step S 101). Then the signal receiver 12 of the information processing device 1 arranged in the country A receives the transfer request signal from the transfer destination terminal 3. In step S101, the signal receiver 12 is an example of signal acquisition means recited in the claims.

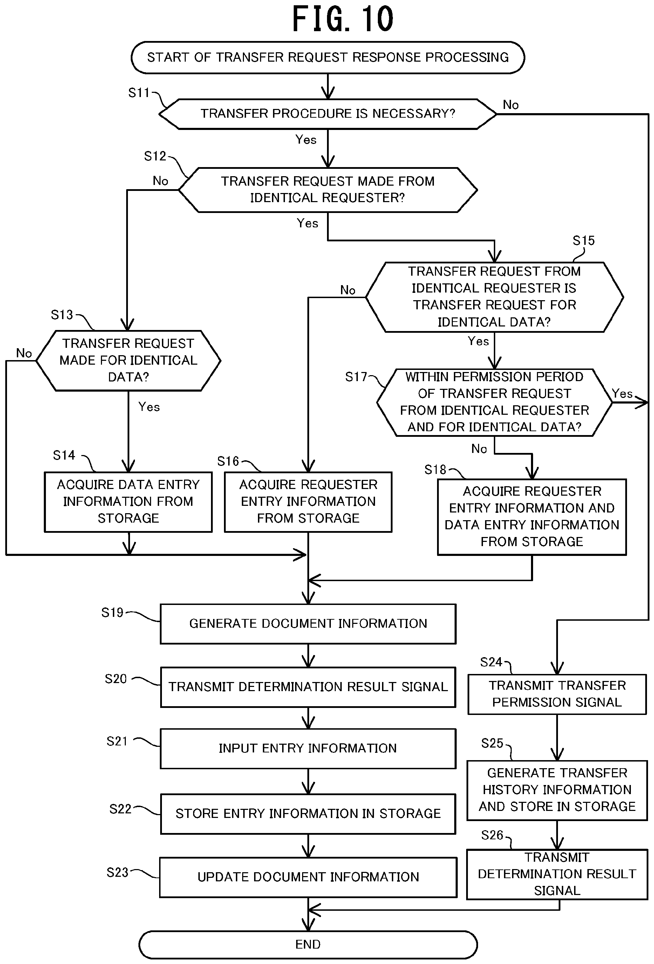

In response to the signal receiver 12 receiving the transfer request signal, the information processing device 1 starts transfer request response processing as illustrated in FIG. 10. When the information processing device 1 starts the transfer request response processing, the transfer procedure necessity determiner 13 of the information processing device 1 determines whether the transfer procedure is necessary (step S11). Specifically, the transfer procedure necessity determiner 13 acquires, based on the transfer destination information received by the signal receiver 12 and the barrier information stored in the storage 11, a barrier flag for transfer from the country A to the country B. The transfer procedure necessity determiner 13, in the case of a value "absence" for all barrier flags, determines that the transfer procedure is unnecessary. Conversely, in the case of a value "presence" for any barrier flag corresponding to "contractual", the transfer procedure necessity determiner 13 determines that the transfer procedure is necessary.

Further, the transfer procedure necessity determiner 13, in the case of the value "presence" for any barrier flag corresponding to "legal", acquires, based on the data identification information received by the signal receiver 12 and the attribute information stored in the storage 11, presence/absence of personal information and presence/absence of technical information for a type of the data for which the transfer request is made. Then the transfer procedure necessity determiner 13, in the case of the value "presence" for a barrier flag of data protection law and the value "presence" for personal information for the type of the data for which the transfer request is made, determines that the transfer procedure is necessary. In the case of the value "presence" for a barrier flag of foreign exchange law for at least one of the transfer source and the transfer destination and the value "presence" for technical information for the type of the data for which the transfer request is made, the transfer procedure necessity determiner 13 determines that the transfer procedure is necessary.

In the manner described above, the transfer procedure necessity determiner 13 determines whether the transfer procedure is necessary. In step S11, the transfer procedure necessity determiner 13 is an example of transfer procedure necessity determination means recited in the claims.

When the transfer procedure necessity determiner 13 determines that the transfer procedure is necessary (YES in step S11), the transfer permissibility determiner 14 further determines, based on the transfer history information stored in the storage 11, whether a transfer request from the identical requester is included in transfer requests for which corresponding transfers are already performed (step S12).

When the transfer permissibility determiner 14 determines that no transfer request from the identical requester is previously made (NO in step S12), the document information generator 15 determines whether a transfer request for the identical data is included in the transfer requests for which the corresponding transfers are already performed (step S13). The document information generator 15, upon determining that no transfer request for the identical data is previously made (NO in step S13), generates the document information (step S19).

Conversely, the document information generator 15, upon determining that a transfer request for the identical data is previously made (YES in step S13), acquires from the storage 11 data entry information of the identical data (step S14) and then proceeds to the processing in step S19.

The transfer permissibility determiner 14, upon determining in step S12 that a transfer request from the identical requester is previously made (YES in step S12), further determines whether the transfer request from the identical requester is a transfer request for the identical data (step S15). When the transfer permissibility determiner 14 determines that the transfer request from the identical requester is not a transfer request for the identical data (NO in step S15), the document information generator 15 acquires the requester entry information of the identical requester from the storage 11 (step S16) and then proceeds to the processing in step S19.

Conversely, the transfer permissibility determiner 14, upon determining that the transfer request from the identical requester is a transfer request for the identical data (YES in step S15), further determines whether a transfer request date of the transfer request that is currently being processed is within a permission period of the transfer request from the identical requester and is for the identical data (step S17). Specifically, the transfer permissibility determiner 14 determines, based on a transfer permission date and a permission period in a corresponding record of the transfer history information, whether the transfer request date of the transfer request that is currently being processed is within the permission period.

When the transfer permissibility determiner 14 determines that the transfer request date is not within the permission period of the transfer request (NO in step S17), the document information generator 15 acquires from the storage 11 the requester entry information of the identical requester and the data entry information of the identical data (step S18) and then proceeds to the processing in step S19.

When the transfer procedure necessity determiner 13 determines in the processing in step S11 that the transfer procedure is unnecessary (NO in step S11) or when the transfer permissibility determiner 14 determines in the processing in step S17 that the transfer request date is within the permission period of the transfer request (YES in step S17), the signal transmitter 17 transmits to the data management server 2 a transfer permission signal indicating permission for the transfer, in addition to the data identification information, the transfer destination information, and the requester identification information (step S24 of FIG. 10 and step S102 of FIG. 9).

Then the signal transmitter 17 generates the transfer history information representing a transfer history of the data and stores the transfer history information in the storage 11 (step S25 of FIG. 10). Further, the signal transmitter 17 transmits to the transfer destination terminal 3 a determination result signal indicating that a determination to permit the transfer is made (step S26 of FIG. 10 and step S103 of FIG. 9).

The document information generator 15, in the processing in step S19 of FIG. 10, generates the document information based on the entry information acquired in the processing in step S14, step S16, or step S18. Specifically, the document information generator 15 specifies a document that is necessary for the transfer procedure based on the barrier information and the attribute information, and fills in the acquired entry information for template information representing the specified document. For example, the document information generator 15 generates the document information by filling in each of character strings for entry items C to J that are included in the requester entry information illustrated in FIG. 14 into a corresponding field of entry fields 1003 to 1010 of the template information illustrated in FIG. 12 and representing a questionnaire paper. The document information generator 15 generates the document information by filling in each of character strings for entry items A and B that are included in the data entry information illustrated in FIG. 15 into a corresponding field of entry fields 1001 and 1002 of the template information illustrated in FIG. 11 and representing a parameter sheet.

Then the signal transmitter 17 transmits to the transfer destination terminal 3 the determination result signal indicating that a determination not to permit the transfer is made (step S20 of FIG. 10 and step S103 of FIG. 9).

Thereafter, the entry information inputter 16 inputs the entry information in response to an operation by the operator in the country A (step S21 of FIG. 10). Specifically, the entry information inputter 16 generates, from the document information generated by the document information generator 15 in the processing in step S19, an image to be displayed on a screen, and displays the generated image on the display 106 after adding an entry field to a portion of the generated image in which no entry information is filled. Then, the entry information inputter 16 inputs, in response to an operation for the keyboard 105 by the operator, a character string as the entry information. In step S21, the entry information inputter 16 is an example of entry information acquisition means recited in the claims. Thereafter, the entry information inputter 16 stores the inputted entry information in the storage 11 (step S22). The storage 11 is an example of storage means recited in the claims.

For example, the entry information inputter 16 generates an image to be displayed on the screen from the document information of the parameter sheet, adds to the generated image the entry fields 1001 and 1002 as illustrated in FIG. 11, and displays the image on the display 106. Then, the entry information inputter 16 inputs character strings corresponding to the entry field 1001 and the entry field 1002 as the entry items A and B of the data entry information, and stores the data entry information in the storage 11. Similarly, the entry information inputter 16 generates an image from the document information of the questionnaire paper, adds to the generated image the entry fields 1003 to 1010 as illustrated in FIG. 12, and displays the image on the display 106, and then, the entry information inputter 16 inputs character strings corresponding to the entry fields 1003 to 1010 as the entry items C to J of the requester entry information, and stores the data entry information in the storage 11.

Then the document information generator 15 updates the document information (step S23). Specifically, the document information generator 15 updates the document information generated in the processing in step S19 by using the document information in which the entry information stored by the entry information inputter 16 in the processing in step S22 is filled, and stores the updated document information in the storage 11. In the case where information to be entered into the document information is filled in for the document information, the processing from step S21 to step S23 is omittable. In step S19 and step S23, the document information generator 15 is an example of document information generation means recited in the claims.

In the manner described above, the information processing device 1 executes the transfer request response processing, and transmits the transfer permission signal in the case where the transfer is to be permitted or generates and updates the document information in the case where the transfer is not to be permitted.

The data management server 2, upon receiving the transfer permission signal, the data identification information, the transfer destination information, and the requester identification information, identifies data based on the received data identification information and transmits the identified data to the transfer destination terminal 3 identified based on the transfer destination information and the requester identification information (step S104 of FIG. 9).

In the processing in step S11 and step S17 described above, the transfer permissibility determiner 14 is an example of transfer permissibility determination means recited in the claims. In the case where the transfer permissibility determiner 14 does not make a determination in the processing of step S11 or step S17 that the transfer is to be permitted, the operator performs the transfer procedure based on the document information updated in step S23 and, according to circumstances, using a document printed on a paper medium. After the transfer is finally approved by a manager and the transfer procedure is completed, the operator operates the information processing device 1 to cause processing similar to the processing from step S24 to step S26 in the transfer request response processing, thereby causing performance of the transfer of data.

The information processing device 1 according to the present embodiment, even in the case where the transfer is permissible without generation of a transfer procedure document, transmits the transfer permission signal to the data management server 2 without receiving an operation from the operator, thereby enabling prompt transfer of data.

Furthermore, even in the case where generation of a transfer procedure document is necessary, entry information inputted in response to a transfer request different from the transfer request that is currently being processed is filled in for the transfer procedure document without reception of an operation from the operator. This enables prompt transfer of data and reduction in the burden imposed on the operator for the operation.

In the aforementioned transfer request response processing, the transfer request that is currently being processed is an example of a second transfer request recited in the claims, and the transfer request different from the transfer request that is currently being processed is an example of a first transfer request recited in the claims. Further, the entry information inputted by the entry information inputter 16 in response to the first transfer request is an example of first entry information recited in the claims. Additionally, the data identification information, the transfer destination information, and the requester identification information that the signal receiver 12 receives in addition to the first transfer request are examples in the claims of first data identification information, first transfer destination information, and first requester identification information, respectively. Similarly, the data identification information, the transfer destination information, and the requester identification information that the signal receiver 12 receives in addition to the second transfer request are examples in the claims of second data identification information, second transfer destination information, and second requester identification information, respectively.

Prompt transfer of data enables easy utilization of data dispersed across multiple countries or regions. For example, not only access to data but also transfer of control of the data across countries or regions can be easily achieved.

### Modified examples

The present disclosure is not limited to the aforementioned embodiment, and various types of changes can be made to the present disclosure.

The aforementioned embodiment describes an example of, using the attribute information for each type of data, distinguishing as to whether transfer of data to different countries or regions is permissible. However, the scope of the present disclosure is not limited to such configuration, and data of which transfer to different countries or regions is permitted and other data may be stored separately, for example. This reduces the risk of, due to an error in the attribute information, the transfer permissibility determiner 14, or the like, transfer of data for which transfer is not permissible, and thus security is improved.

An example of storing in the storage 11 the transfer history information as evidence necessary for the transfer procedure is described. However, in the case where a document to serve as the evidence is necessary, document information representing the document to serve as the evidence may be generated based on the transfer history information.

The information processing device 1 may transmit the transfer permission signal to the transfer destination terminal 3 instead of transmitting to the data management server 2. In this case, a configuration is desirable in which the transfer destination terminal 3 is allowed to access directly the data management server 2 only upon receiving the transfer permission signal.

Data that is subject to the transfer is not limited to the example described in the aforementioned embodiment, that is, data in a string format, and may be data in any form, such as image data and an application program. Further, using the information processing device 1 according to the present embodiment as is for import/export of a tangible object simplifies procedures for the import/export, and thus, reduces the burden imposed on the operator for the procedure.

In the present embodiment, an example is described in which a determination as to whether the transfer procedure is necessary is made based on the barrier information and the attribute information. Each of the barrier information and the attribute information is merely an example, and information in any format that provides a reference for the determination as to whether the transfer procedure is necessary can be employed. For example, in the aforementioned embodiment, data is classified in terms of types of data and the attribute information is set for each type of data. This achieves a balance between the time taken for setting the attribute information and determination performance of the computer, and thus results in a highly feasible configuration. However, employment of a high determination performance computer enables omission of the setting of unique attribute information for each data type, and in this case, a configuration may be employed in which the content of data is analyzed to make the determination of the presence/absence of the technical information and presence/absence of the personal information. Employment of such configuration enables appropriate determination as to whether the transfer procedure is necessary even without the bother of the operator of setting for each type of data presence/absence of the technical information and presence/absence of the personal information.

The attribute information may be set for each type of data, instead of classifying data in terms of types of data. This enables detailed setting as to whether the transfer procedure is necessary, thereby improving flexibility.

The information processing device 1 and the data management server 2 according to the aforementioned embodiment are achievable not only by a dedicated device but also by a general-purpose computer. For example, the information processing device 1 and the data management server 2 that execute the aforementioned processing may be achieved by installing, from a recording medium storing a program that causes a computer to execute any of such processing, the program on a computer. Alternatively, the information processing device 1 and the data management server 2 may be achieved by using a technique of cloud computing, for example, by cooperation between multiple servers, computers or the like or cooperation between a dedicated device, a server, a computer, or the like.

Any method that for supplying the program to the computer can be employed. For example, the supplying may be achieved via a communication line, a communication network, a communication system, or the like.

In the case where an operating system (OS) provides a portion of the aforementioned functions, a program may provide functions other than the part provided by the OS.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

### Reference Signs List

- 1: Information processing device
- 2: Data management server
- 3: Transfer destination terminal
- 11: Storage
- 12: Signal receiver
- 13: Transfer procedure necessity determiner
- 14: Transfer permissibility determiner
- 15: Document information generator
- 16: Entry information inputter
- 17: Signal transmitter
- 101: CPU
- 102: RAM
- 103: ROM
- 104: Hard disk drive
- 105: Keyboard
- 106: Display
- 107: Network card
- 1001-1010: Entry field

## Claims

1. An information processing device comprising:
signal acquisition means for acquiring a signal representing a transfer request to transfer data;
entry information acquisition means for acquiring entry information that is information to be entered into a transfer procedure document, the transfer procedure document being a document for a transfer procedure with respect to the transfer request;
storage means for storing the entry information acquired by the entry information acquisition means; and
document information generation means for (i) retrieving, in response to a second transfer request, from the storage means first entry information acquired by the entry information acquisition means to be included in the transfer procedure document for a transfer procedure with respect to a first transfer request that is different from the second transfer request, and (ii) generating document information that represents the transfer procedure document including the retrieved first entry information.

2. The information processing device according to claim 1, wherein
the signal acquisition means further acquires data identification information for identification of the data, transfer destination information representing a transfer destination of the data, and requester identification information for identification of a requester making the transfer request for the data,
the storage means stores the entry information acquired by the entry information acquisition means in association with the data identification information, the transfer destination information, and the requester identification information, and
the document information generation means (i) retrieves, based on second data identification information, second transfer destination information, or second requester identification information acquired by the signal acquisition means for the second transfer request, from the storage means, first data identification information, first transfer destination information, or first requester identification information associated with the first entry information, and (ii) generates document information that represents the transfer procedure document including the entry information associated with the retrieved first data identification information, first transfer destination information, or first requester identification information.

3. The information processing device according to claim 2, wherein
the storage means further stores attribute information that represents an attribute of the data,
the information processing device further includes transfer procedure necessity determination means for (i) acquiring from the storage means attribute information that represents an attribute of data identified by the second data identification information, and (ii) determining, based on the acquired attribute information and the second transfer destination information, whether the transfer procedure with respect to the second transfer request is necessary, and
the document information generation means generates the document information upon the transfer procedure necessity determination means determining that the transfer procedure with respect to the second transfer request is necessary.

4. The information processing device according to claim 3, wherein
the storage means further stores transfer history information that represents a history of transfer of the data, and
the information processing device further includes transfer permissibility determination means for determining, upon the transfer procedure necessity determination means determining that the transfer procedure with respect to the second transfer request is necessary, whether transfer is to be permitted based on the transfer history information stored in the storage means.

5. The information processing device according to claim 4, wherein the transfer permissibility determination means determines, upon the transfer procedure necessity determination means determining that the transfer procedure with respect to the second transfer request is unnecessary, that the transfer is to be permitted.

6. A data transfer management method executed by a computer including storage means, the data transfer management method comprising:
receiving a transfer request to transfer data;
acquiring entry information that is information to be entered into a transfer procedure document, the transfer procedure document being a document for a transfer procedure with respect to the transfer request;
storing the acquired entry information in the storage means; and
retrieving, in response to a second transfer request, from the storage means first entry information acquired to be included in the transfer procedure document for a transfer procedure with respect to a first transfer request that is different from the second transfer request, and generating document information that represents the transfer procedure document including the retrieved first entry information.

7. A program causing a computer including storage means to execute:
acquiring a signal representing a transfer request to transfer data;
acquiring entry information that is information to be entered into a transfer procedure document, the transfer procedure document being a document for a transfer procedure with respect to the transfer request;
storing the acquired entry information in the storage means; and
retrieving, in response to a second transfer request, from the storage means first entry information acquired to be included in the transfer procedure document for a transfer procedure with respect to a first transfer request that is different from the second transfer request, and generating document information that represents the transfer procedure document including the retrieved first entry information.
